# EUROPÄISCHE PATENTSCHRIFT

(11) **EP 2 349 763 B1**
(45) Veröffentlichungstag und Bekanntmachung des Hinweises auf die Patenterteilung: **07.11.2012**
(21) Anmeldenummer: 08758056.9
(22) Anmeldetag: 08.05.2008
(51) Int. Cl.: B60J 7/185

(54) **VERSCHLUSSVORRICHTUNG FÜR EIN VERDECK EINES CABRIOLET-KRAFTFAHRZEUGES**
CLOSURE DEVICE FOR A TOP OF A CONVERTIBLE MOTOR VEHICLE
DISPOSITIF DE FERMETURE POUR LA CAPOTE D'UN VÉHICULE CABRIOLET

(30) Priorität: 13.06.2007 DE 102007027259
(43) Veröffentlichungstag der Anmeldung: 03.08.2011
(73) Patentinhaber: Wilhelm Karmann GmbH, 49084 Osnabrück (DE)
(72) Erfinder: SELLE, Heinrich, 32549 Bad Oeynhausen (DE); PLESTERNINGS, Frank, 44536 Lünen Brambauer (DE)
(74) Vertreter: Kronthaler, Schmidt & Coll.
(86) Internationale Anmeldenummer: PCT/DE2008/000800
(87) Internationale Veröffentlichungsnummer: WO 2008/151590

(56) Entgegenhaltungen:
- DE-A1-102005 028 458
- DE-U1- 20 023 676
- US-A1- 2006 038 411

## Beschreibung

Die Erfindung betrifft eine Verschlussvorrichtung zum Verschließen eines Verdecks eines Cabriolet-Kraftfahrzeugs, sowie ein Verdeck eines Cabriolet-Kraftfahrzeugs mit einer derartigen Verschlussvorrichtung. Eine solche Verschlussvorrichtung ist aus DE 10 2005 028 458 bekannt.

Bei Cabriolet-Fahrzeugen werden in der Praxis Verschlussvorrichtungen eingesetzt, um das Cabriolet-Verdeck im geschlossenen Zustand an einem üblicherweise einen Windschutzscheibenrahmen darstellenden Karosserierahmenteil festzulegen. Dabei sind manuelle und vollautomatische Verschlussvorrichtungen bekannt.

Eine manuell zu bedienende Verschlussvorrichtung für ein Verdeck eines Cabriolet-Fahrzeugs ist z. B. in dem europäischen Patent EP 0 560 027 B1 offenbart. Bei dieser bekannten Lösung ist an der Dachspitze des Verdecks mittig ein Einhand-Schwenkgriff angeordnet, mittels dem sowohl Ver- und Entriegelungsbewegungen von zwei jeweils einer Fahrzeugseite zugeordneten Riegelorganen als auch eine Bewegung des gesamten Faltverdecks ausführbar sind. Bei einer Ver- oder Entriegelung werden in zwei Bewegungsphasen jeweils ein einem Riegelorgan zugeordneter Haltekörper und das Riegelorgan selbst in dem jeweiligen Schließbereich am fahrzeugquerseitigen Ende des windlaufes betätigt.

Aus dem europäischen Patent EP 0 850 793 B1 ist ebenfalls eine Verschlussvorrichtung bekannt, welche in seitlichen Bereichen des Cabriolet-Verdecks oder des Windschutzscheibenrahmens angeordnete Verschlusselemente und zwischen den Verschlusselementen ein mittig angeordnetes Betätigungsorgan in Form eines Griffes aufweist, um das Cabriolet-Verdeck an dem Rahmenteil festzulegen. Dazu ist zwischen den Verschlusselementen und dem Betätigungsorgan eine Mechanik derart vorgesehen, dass in Abhängigkeit der Verdrehung des Griffes die Verschlusselemente mit Verschlussgegenelementen in Eingriff kommen und somit das Cabriolet-Verdeck festlegen oder dieses freigeben und somit eine Öffnungsbewegung des Cabriolet-Verdecks ermöglichen.

Bei diesen bekannten Lösungen erfolgt eine erste Verrastung vor dem endgültigen Verschließen des Verdecks an dem Windschutzscheibenrahmen jeweils im Bereich der zum endgültigen Verschließen dienenden Verriegelungsorgane, wobei diese erste Verrastung primär dazu dient, das Verdeck in einer sogenannten "Vor-Verschließposition" zu halten, in der das Verdeck bis zu einem gewissen Maß gegen eine unbeabsichtigte Öffnungsbewegung gesichert ist und das Schließen der Verschlussorgane erleichtert ist.

In der Praxis treten insbesondere bei manuell zu schließenden Verdecken während eines Schließvorgangs Abweichungen in der Positionierung einer Dachspitze des Verdecks gegenüber dem Windschutzscheibenrahmen auf den gegenüberliegenden Fahrzeugseiten auf, so dass sich bei der Betätigung der ersten Verrastung eine Verkantung der Dachspitze ergeben kann. Dies zu vermeiden und ein synchrones, sicheres Aktivieren und Deaktivieren der ersten Verrastung zu gewährleisten, erfordert wiederum einen erheblichen konstruktiven Aufwand.

Es ist daher Aufgabe der vorliegenden Erfindung, eine Vorrichtung zum Festlegen eines Verdecks eines Cabriolet-Kraftfahrzeuges an einem Karosserierahmenteil zu schaffen, bei der auf einfache Art und weise eine erste Verrastung des Verdecks vor einem endgültigen Verschließen des Verdecks an dem Karosserierahmenteil mit einer hohen Funktionssicherheit und großem Bedienkomfort herstellbar und aufhebbar ist.

Diese Aufgabe wird gelöst mit einer Vorrichtung zum Festlegen eines Verdecks eines Cabriolet-Kraftfahrzeuges an einem Karosserierahmenteil nach den Merkmalen des Patentanspruches 1.

Diese Vorrichtung ist mit einer Verschlussvorrichtung ausgebildet, welche wenigstens ein dem Verdeck zugeordnetes Verschlusselement und wenigstens ein hiermit in Eingriff bringbares, einem Karosserierahmenteil zugeordnetes Verschlussgegenelement umfasst, und mit einer zusätzlichen Rasteinrichtung ausgebildet, welche ein dem Verdeck zugeordnetes Rastelement und ein hiermit in Eingriff bringbares, dem Karosserierahmenteil zugeordnetes Rastgegenelement umfasst, wobei erfindungsgemäß vorgesehen ist, dass die Rasteinrichtung im Bereich eines wenigstens annähernd in Fahrzeugquerrichtung mittig angeordneten Griffelementes, mittels dem das Verdeck manuell in und aus einer Verschließstellung bewegbar ist, angeordnet ist und bei Überführung des Verdecks in die Verschließstellung vor einem Schließen der Verschlussvorrichtung selbsttätig aktiviert wird und zur Überführung des Verdecks aus der Verschließstellung durch Betätigung des Griffelementes deaktivierbar ist.

Bei einem erfindungsgemäß ausgebildeten Verdeck wird vorteilhafterweise mit hoher Funktionssicherheit eine erste Rastposition bzw. Vorverrastung des Verdecks an dem Karosserierahmenteil durch die zusätzliche Rasteinrichtung erreicht. Durch das automatische Verrasten der Rasteinrichtung bei Überführung des Verdecks in die Verschließstellung wird das Verdeck gegen ein unbeabsichtigtes Reversieren der Schließbewegung z. B. aufgrund einer Windböe gesichert und ein sicherer Eingriff der Verschlusselemente in die Verschlussgegenelemente gewährleistet. Aufgrund einer zentralen Rasteinrichtung im Bereich eines mittigen Griffelementes kann eine aufwändige Synchronisierung einer Vorverrastung im Bereich von seitlichen Verschlusselementen entfallen.

Das Griffelement kann bei einer vorteilhaften Ausführung der Erfindung derart ausgestaltet sein, dass es im nichtbetätigten Zustand flach an der Dachspitze des Verdecks anliegt oder in eine Verkleidung der Dachspitze des Verdecks integriert ist, wobei ein Taster vorgesehen sein kann, bei dessen Betätigung das Griffelement beispielsweise aufgrund einer Federkraft soweit gegenüber einer Grundfläche der Dachspitze verschwenkt wird, dass das Griffelement mit der Hand einer Bedienperson hintergriffen werden kann.

Die Erfindung kann in vorteilhafter Weise mit Verschlussvorrichtungen bekannter Art kombiniert werden, so dass beispielsweise in bewährter Weise zwei wenigstens annähernd symmetrisch zu einer Fahrzeugmittelachse angeordnete Verschlusselemente an dem Verdeck und hiermit korrespondierende Verschlussgegenelemente an dem Karosserierahmenteil vorgesehen werden können.

Die Erfindung ist auch nicht auf eine bestimmte Antriebsart des Verdecks beschränkt. Das Verdeck kann zwischen einer Ablageposition heckseitig eines Fahrgastraumes und der Position der Vorverrastung rein manuell bewegbar sein, jedoch ist es auch denkbar, für diesen Bewegungsablauf einen motorischen, z. B. elektrischen oder hydraulischen Antrieb zu nutzen.

Weitere Vorteile und vorteilhafte Ausgestaltungen des Gegenstandes nach der Erfindung sind der Beschreibung, der Zeichnung und den Patentansprüchen entnehmbar.

Mehrere Ausführungsbeispiele einer Vorrichtung nach der Erfindung sind in der Zeichnung schematisch vereinfacht dargestellt und werden in der nachfolgenden Beschreibung näher erläutert.

Es zeigt:
- Fig. 1: eine vereinfachte dreidimensionale Ansicht eines Cabriolet-Fahrzeugs mit einem in geschlossenem Zustand dargestellten erfindungsgemäßen Verdeck;
- Fig. 2: eine bereichsweise freigestellte Ansicht einer ersten Ausführung einer Vorrichtung zum Festlegen des Verdecks an einem einen Windschutzscheibenrahmen darstellenden Karosserierahmenteil, wobei eine Verschlussvorrichtung beispielhaft für eine Fahrzeugseite in einem das Verdeck verschließenden Zustand gezeigt ist;
- Fig. 3: eine weiter freigestellte Ansicht eines Teils der Vorrichtung der Fig. 2 zum Festlegen des Verdecks an dem Windschutzscheibenrahmen, wobei ein Griffelement zum Antrieb der Verschlussvorrichtung und einer zusätzlichen Rasteinrichtung im geschlossenen Zustand des Verdecks gezeigt ist;
- Fig. 4: eine noch weiter freigestellte Ansicht des in Fig. 3 gezeigten Teils der Vorrichtung der Fig. 2, wobei das Griffelement und die Rasteinrichtung bei einem gelösten Zustand der Rasteinrichtung zu Beginn einer Verdecköffnungsbewegung gezeigt sind;
- Fig. 5: eine alternative Ausgestaltung des in Fig. 4 gezeigten Teils der Vorrichtung der Fig. 2 mit einer der Fig. 4 entsprechenden Stellung des Griffelementes und der Rasteinrichtung; und
- Fig. 6: eine weitere alternative Ausgestaltung des in Fig. 4 bzw. Fig. 5 gezeigten Teils der Vorrichtung der Fig. 2 mit einer der Fig. 4 und Fig. 5 entsprechenden Stellung des Griffelementes und der Rasteinrichtung.

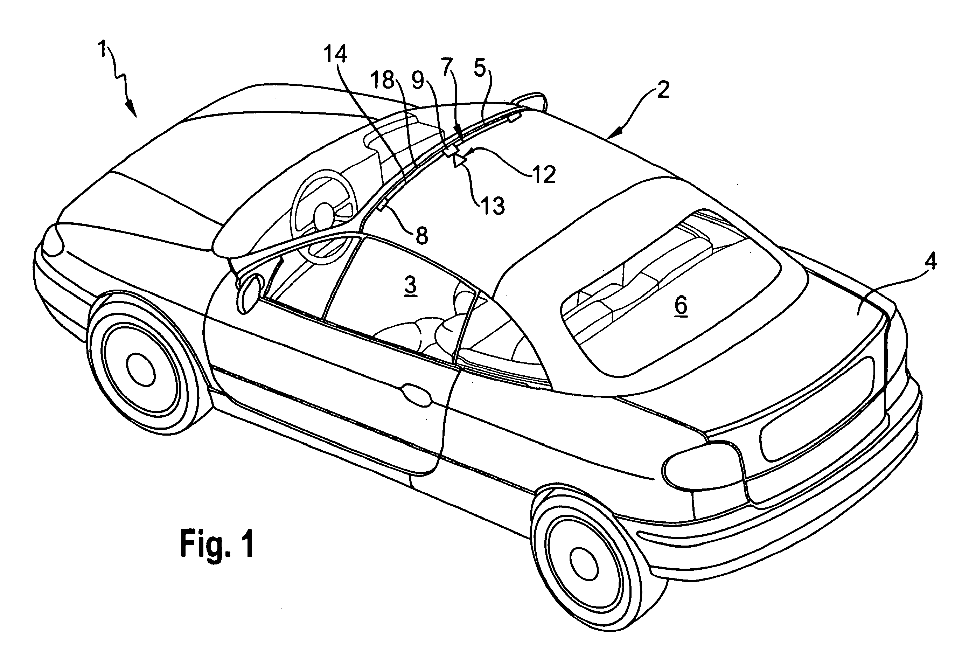

Bezug nehmend auf Fig. 1 ist ein Cabriolet-Fahrzeug 1 mit einem in einer Schließstellung dargestellten, vorliegend als Soft-Top-Verdeck ausgebildetem Verdeck 2 gezeigt, welches einen Fahrgastraum 3 von einem einen heckseitigen Stauraum begrenzenden Heckdeckel 4 bis zu einem Windschutzscheibenrahmen 5 überspannt.

Das Verdeck 2 weist ein herkömmliches, nicht näher dargestelltes Verdeckgestänge auf, mittels dem das Verdeck 2 zwischen der in Fig. 1 dargestellten Schließposition und einer in einem heckseitigen Ablagebereich 6 abgelegten Öffnungsposition überführbar ist.

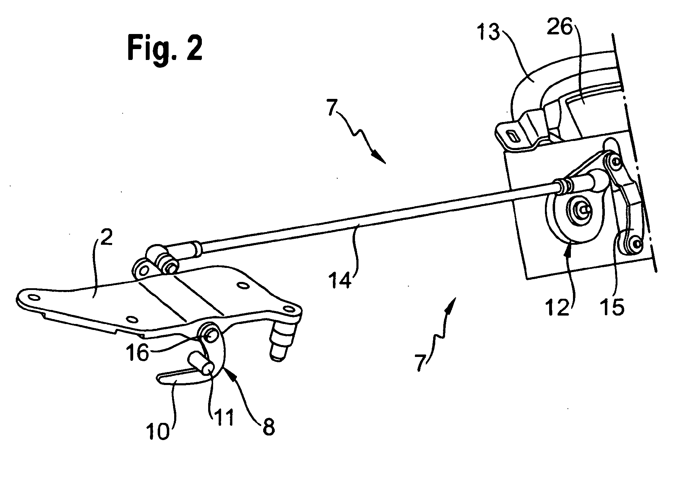

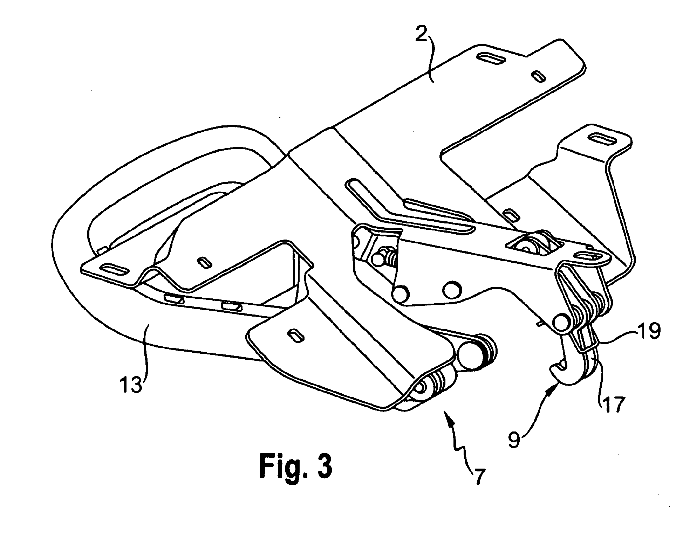

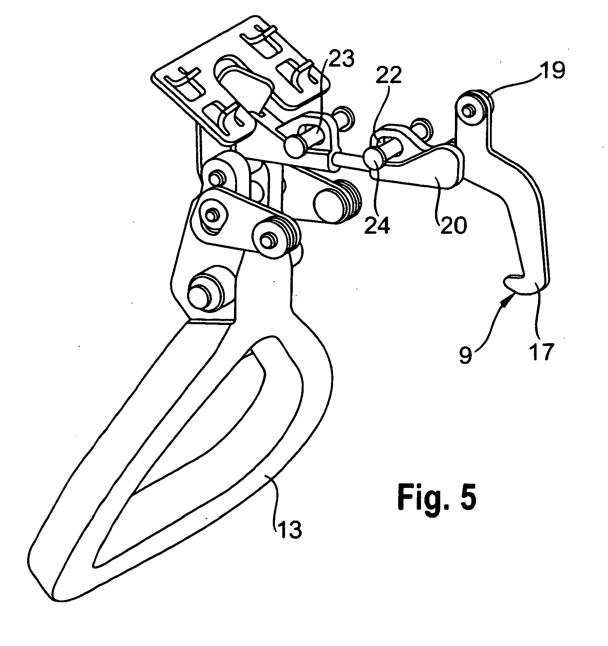

Um das Verdeck 2 in geschlossenem Zustand an einem hier den Windschutzscheibenrahmen 5 darstellenden Karosserierahmenelement arretieren zu können, ist eine entsprechende, in den Fig. 2 bis Fig. 6 näher gezeigte Vorrichtung 7 zum Festlegen des Verdecks 2 vorgesehen, welche eine Verschlussvorrichtung 8 und eine besonders in den Fig. 3 bis 6 näher ersichtliche zusätzliche Rasteinrichtung 9 zur Vorverrastung umfasst.

Die Verschlussvorrichtung 8 weist zwei an einer Dachspitze bzw. Verdeckvorderkante seitlich symmetrisch bezüglich einer Fahrzeugmittellängsachse angeordnete Verschlusselemente 10 auf, die mit nur prinzipmäßig in der Fig. 2 angedeuteten, in der Praxis hinter einer Verkleidung liegenden Verschlussgegenelementen 11 an dem Windschutzscheibenrahmen 5 in Eingriff bringbar sind, um das Verdeck 2 an dem Windschutzscheibenrahmen 5 fest zu verschließen.

Die Verschlussvorrichtung 8 weist einen zentral zwischen den Verschlusselementen 10 angeordneten Antrieb 12 auf, welcher vorliegend ein Griffelement 13 und das Griffelement 13 mit den Verschlusselementen 10 verbindende Koppelelemente 14 zum manuellen Antrieb der Verschlusselemente 10 umfasst.

Die Koppelelemente 14 sind vorliegend im Wesentlichen je als gelenkig gelagerte Verbindungsstangen ausgebildet, jedoch können diese in weiteren Ausführungen auch als anderes Antriebsgestänge, Seilzüge oder ähnliches ausgebildet sein.

Wie in Fig. 2 schematisch für die in Fahrzeugfrontrichtung rechte Fahrzeugseite gezeigt ist, ist dem Griffelement 13 ein Hebelmechanismus 15 nachgeordnet, welcher eine vertikale Drehbewegung des Griffelementes 13 in Fahrzeuglängsrichtung in eine Axialbewegung der Koppelelemente 14 transformiert.

An ihrem dem Griffelement 13 abgewandten Ende sind die Koppelelemente bzw. Verbindungsstangen 14 jeweils mit den Verschlusselementen 10, welche hakenartige Riegelelemente darstellen, derart wirkverbunden, dass die Verschlusselemente bzw. Riegelelemente 10 bei einer rotatorischen Bewegung des Griffelementes 13 und hieraus resultierender axialer Verlagerung der Koppelelemente 14 horizontal um eine Achse verdreht werden und dadurch in einer Fangstellung des Verdecks 2 mit den hier bolzenartig ausgebildeten Verschlussgegenelementen 11 in Eingriff bringbar sind.

Die Anlenkung der Koppelelemente 14 an den Verschlusselementen 10 erfolgt vorliegend auf eine an sich bekannte Weise über einen Hebelarm 16, an dem sowohl das zugeordnete Koppelelement 14 als auch das zugeordnete Verschlusselement 10 mittels Gelenken beweglich gelagert sind.

Neben dem Antrieb der Verschlussvorrichtung 8 dient das wenigstens annähernd in Fahrzeugquerrichtung mittig angeordnete Griffelement 13 weiterhin dem Antrieb der zusätzlichen, einer Vorverrastung dienenden Rasteinrichtung 9, welche in unterschiedlichen Ausgestaltungen in den Fig. 3 bis Fig. 6 ersichtlich ist.

Aus Gründen der Übersichtlichkeit werden nachfolgend jeweils für bau- bzw. funktionsgleiche Elemente aller Ausführungen der Rasteinrichtung 9 gleiche Bezugszeichen verwendet.

Die Rasteinrichtung 9 weist jeweils ein dem Verdeck 2 zugeordnetes, als Rasthaken ausgebildetes Rastelement 17 und ein hiermit in Eingriff bringbares, der Karosserie bzw. dem Windschutzscheibenrahmen 5 zugeordnetes Rastgegenelement 18 auf, wobei das Rastgegenelement bei den gezeigten Ausführungen jeweils in einfachster Weise durch eine mit einer Hinterschneidung, d. h. einem von dem Fanghaken 17 hintergreifbaren Element, ausgebildete dem Fahrgastraum 3 zugewandte Kante 18 des Windschutzscheibenrahmens 5 gebildet wird.

Bei allen gezeigten Ausführungen ist der Rasthaken 17 mit der Federkraft einer Federeinrichtung 19 beaufschlagt, welche den Rasthaken 17 bei Überführung des Verdecks 2 in dessen Verschließstellung in eine die Kante 18 des Windschutzscheibenrahmens 5 hintergreifende Raststellung bewegt. Auf diese Weise wird die Rasteinrichtung 9 bei Überführung des Verdecks 2 in die Verschließstellung vor einem Schließen der Verschlussvorrichtung 8 selbsttätig aktiviert.

Der Ablauf eines Schließvorganges des Verdecks 2 erfolgt damit wie folgt: Das Verdeck 2 wird aus einer geöffneten Stellung in eine Verschließstellung überführt, wobei sich das Griffelement 13 in einer ersten, in Fahrzeuglängsrichtung herabgeschwenkten Position befindet, so dass eine Bedienperson in der Endphase des Schließvorganges das Verdeck 2 ergonomisch günstig im Wesentlichen herabziehen kann. Kurz vor Erreichen der Verschließstellung der Dachspitze bzw. Verdeckvorderkante an der rückwärtigen Kante 18 des Windschutzscheibenrahmens 5 gleitet der federnd gelagerte Rasthaken 17 über die Kante 18 und schnappt hinter dieser ein, so dass eine entgegengesetzte Bewegung des Verdecks 2 durch den Rasthaken 17 verhindert wird. Zugleich befinden sich in dieser Vorrastposition die Verschlusselemente 10 und Verschlussgegenelemente 11 der Verschlussvorrichtung 8 in einer Position, von der aus ein sicheres Ineinandergreifen der Verschlusselemente 10 und Verschlussgegenelemente 11 gewährleistet ist.

Der Benutzer weiß beispielsweise durch eine körperliche Entlastung und die fehlende Möglichkeit, das Verdeck 2 wieder anheben zu können, sowie durch ein bei dem Einschnappen des Rasthakens 17 an der Kante 14 des Windschutzscheibenrahmens 5 auftretendes Schnappgeräusch, dass die Vorverrastung betätigt ist und er das Griffelement 13 in die entgegengesetzte Richtung zur Endverriegelung betätigen kann.

Durch das Zurückverschwenken des Griffelementes 17 in eine im Wesentlichen horizontale, an der Dachspitze anliegende Position wird die Verschlussvorrichtung 8 zu einer die Verschlusselemente 10 mit den Verschlussgegenelementen 11 in Eingriff bringenden Bewegung angetrieben. Das Verdeck 2 wird dadurch verriegelt.

Das Entriegeln und Öffnen des Verdecks 2 erfolgt wiederum durch ein Verschwenken des Griffelementes 13 in Fahrzeuglängsrichtung entgegen der Windschutzscheibe, wobei das Griffelement 13 zunächst über den Hebelmechanismus 15 und die Koppelelemente 14 die Verschlussvorrichtung 8 entriegelt und bei einer weiteren Verschwenkung in eine zweite, maximale Position in Richtung Windschutzscheibe, welche vorliegend etwa 10° bis 15° vor der ersten Position liegt, in der das Verdeck 2 bei einer Schließbewegung in seine Verschließstellung gezogen wird, den Rasthaken 17 der Rasteinrichtung 9 in eine entrastende Stellung drückt.

Das Griffelement 13 ist hierzu mit dem Rasthaken 17 der Rasteinrichtung 9 über ein hebelartiges Verbindungselement 20 gelenkig verbunden.

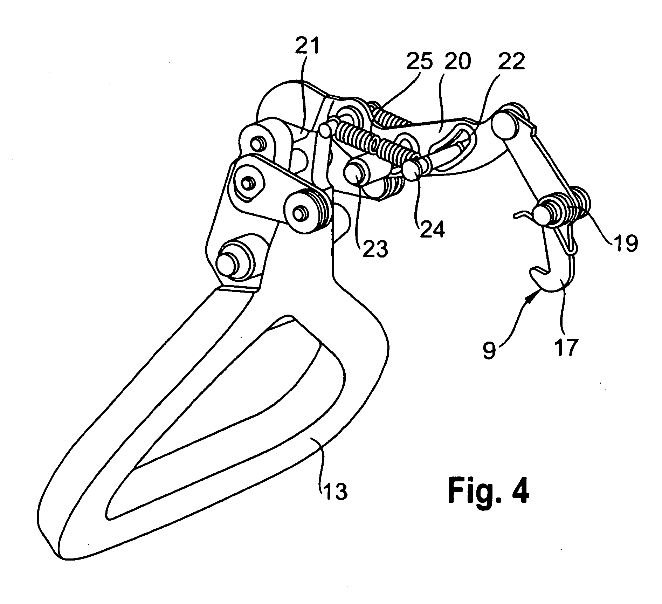

Bei der Ausführung nach Fig. 3 und Fig. 4 greift das Verbindungselement 20 an seinem dem Griffelement 13 zugewandten Ende hakenartig um einen Mitnehmerbolzen 21 des Griffelements 13 und ist mittels einer gebogenen Langlochführung 22 an fest an dem Verdeck 2 angeordneten Bolzen 23, 24 entgegen der Kraft einer Feder 25 längsbeweglich.

Ausgehend von der in Fig. 3 gezeigten Ruheposition des Griffelements 13, welche das Griffelement 13 sowohl im abgelegten Zustand des Verdecks 2 als auch im geschlossenen Zustand des Verdecks 2 einnimmt, wird das Verbindungselement 20 bei einer Verschwenkung des Griffelementes 13 in seine maximale fahrzeugfrontseitige Position durch seine Anbindung an den Mitnehmerbolzen 21 in Fahrzeugheckrichtung verlagert, wobei der mit dem Verbindungselement 20 an dessen dem Griffelement 13 abgewandten Ende gelenkig verbundene Rasthaken 17 mit seinem freien Ende in Fahrzeugfrontrichtung verschwenkt wird und somit in eine nicht verrastende Position gelangt.

Das Vorliegen der nicht verrastenden Position der Rasteinrichtung 9 nimmt die Bedienperson bei einer einfachen Ausführung der Erfindung wiederum sensorisch bzw. akustisch dadurch wahr, dass ein Schnappgeräusch zu vernehmen ist und der Zug auf das Verdeck 2 zunimmt. Damit weiß die Bedienperson, dass sie das Griffelement 13 in seine ursprüngliche, horizontale bzw. an der Dachspitze anliegende Position zurückschwenken kann und das Verdeck 2 vollständig geöffnet werden kann.

Das Griffelement 13 ist bei der gezeigten Ausführung in seiner an der Dachspitze anliegenden Ruheposition vollständig in eine nicht weiter gezeigte Verkleidung an der Unterseite der Dachspitze integriert, so dass das Griffelement 13, um es mit einer Hand greifen zu können, zunächst in eine Greifposition aus der Verkleidung herausgeschwenkt werden muss. Hierzu dient ein mit dem Griffelement 13 über einen nicht näher dargestellten Federmechanismus verbundener Taster 26, welcher in der Fig. 2 dargestellt ist.

Die in Fig. 4 gezeigte Ausführungsvariante unterscheidet sich von der Ausführung nach Fig. 2 und Fig. 3 im Wesentlichen durch eine alternative, zweiteilige Ausgestaltung des Verbindungselements 20 zwischen dem Griffelement 13 und dem Rasthaken 17 der Rasteinrichtung 9. Die Funktionsweise bei dieser Ausführung jedoch analog der zuvor beschriebenen.

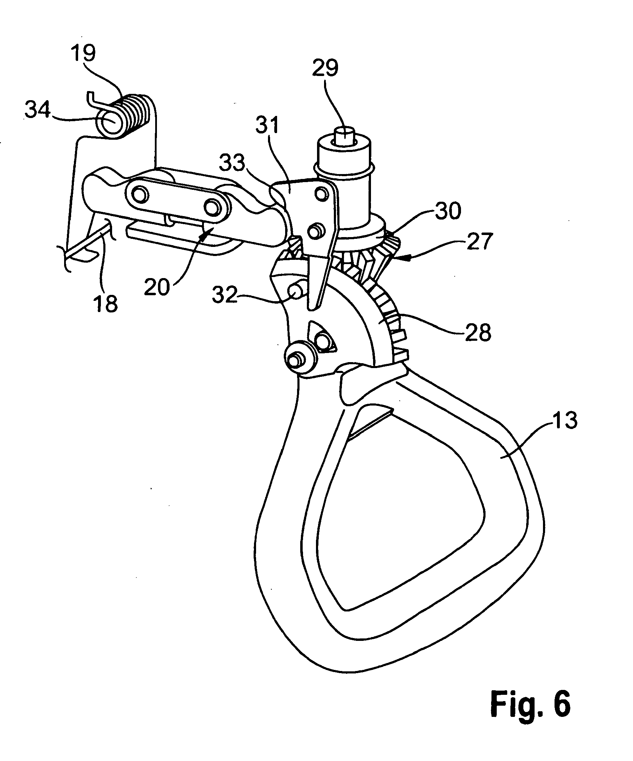

Die Fig. 6 zeigt eine weitere Alternative der Verbindung des Griffelementes 13 mit dem Rasthaken 17, wobei das mit dem Rasthaken 17 gelenkig verbundene und in dessen Schwenkrichtung axial bewegliche Verbindungselement 20 hier über eine Kegelradpaarung 27 an das Griffelement 13 angebunden ist.

Die Kegelradpaarung 27 weist ein erstes mit dem Griffelement 13 drehfest verbundenes Teilkegelrad 28 und ein hiermit kämmendes, drehfest mit einer Antriebsachse 29 für die Verschlussvorrichtung 8 verbundenes Kegelrad 30 auf, so dass eine Schwenkbewegung des Griffelementes 13 in eine Antriebsbewegung für die Verschlussvorrichtung 8 umgesetzt werden kann.

Zur Anbindung des Griffelementes 13 an das mit dem Rasthaken 17 verbundene Verbindungselement 20 ist ein zusätzlicher Schwenkhebel 31 zwischen dem mit dem Griffelement 13 verbundenen Teilkegelrad 28 und dem Verbindungselement 20 vorgesehen. Bei einer Verschwenkung des Griffelementes 13 in Fahrzeugfrontrichtung bewirkt ein an einem Ende des Schwenkhebels 31 anliegender Anschlag 32 eine Verkippung des Schwenkhebels 31 um eine Schwenkachse 33 in eine Drehrichtung entgegengesetzt zur Drehrichtung des Griffelementes 13, wobei ein dem Verbindungselement 20 zugewandtes, eine Kontur einer Kulissenführung 33 aufweisendes Ende des Schwenkhebels 31 das Verbindungselement 20 kulissengeführt gegen den um eine feste Drehachse 34 an der Dachspitze entgegen der Kraft der Federeinrichtung 19 drehbaren Rasthaken 17 bewegt. Dabei wird der Rasthaken 17 in eine nichtrastende Position in Richtung der Windschutzscheibe 5 verschwenkt.

Neben den gezeigten vorteilhaften Möglichkeiten der Verbindung des Griffelementes 13 mit der Rasteinrichtung 9 und der Verschlussvorrichtung 8 ist prinzipiell eine Kombination der gezeigten Lösungen oder der Einsatz einer Vielzahl an bekannten Konstruktionen zur Umsetzung einer Drehbewegung eines Bauteiles wie des Griffelementes in eine Axial- und/oder Drehbewegung eines weiteren Bauteiles wie des Rasthakens denkbar, ohne den Gegenstand der Erfindung zu beschränken.

## Patentansprüche

1. Vorrichtung zum Festlegen eines Verdecks (2) eines Cabriolet-Kraftfahrzeuges (1) an einem Karosserierahmenteil (5), mit einer Verschlussvorrichtung (8), welche wenigstens ein dem Verdeck (2) zugeordnetes Verschlusselement (10) und wenigstens ein hiermit in Eingriff bringbares, einem Karosserierahmenteil (5) zugeordnetes Verschlussgegenelement (11) umfasst, und mit einer zusätzlichen Rasteinrichtung (9), welche ein dem Verdeck (2) zugeordnetes Rastelement (17) und ein hiermit in Eingriff bringbares, dem Karosserierahmenteil (5) zugeordnetes Rastgegenelement (18) umfasst,
**dadurch gekennzeichnet,**
**dass** die Rasteinrichtung (9) im Bereich eines wenigstens annähernd in Fahrzeugquerrichtung mittig angeordneten Griffelementes (13), mittels dem das Verdeck (2) manuell in und aus einer Verschließstellung bewegbar ist, angeordnet ist und bei Überführung des Verdecks (2) in die Verschließstellung vor einem Schließen der Verschlussvorrichtung (8) selbsttätig aktiviert wird und zur Überführung des Verdecks (2) aus der Verschließstellung durch Betätigung des Griffelementes (13) deaktivierbar ist.

2. Vorrichtung nach Anspruch 1,
**dadurch gekennzeichnet,**
**dass** das Rastelement (17) mit der Federkraft einer Federeinrichtung (19) beaufschlagt ist, welche das Rastelement (17) bei Überführung des Verdecks (2) in Verschließstellung in eine das Rastgegenelement (18) hintergreifende Raststellung bewegt.

3. Vorrichtung nach Anspruch 1 oder 2,
**dadurch gekennzeichnet,**
**dass** das Rastelement als ein Rasthaken (17) ausgebildet ist.

4. Vorrichtung nach einem der Ansprüche 1 bis 3,
**dadurch gekennzeichnet,**
**dass** das Rastgegenelement als eine mit einer Hinterschneidung ausgebildete Kante (18) des Windschutzscheibenrahmens (5) ausgeführt ist.

5. Vorrichtung nach einem der Ansprüche 1 bis 4,
**dadurch gekennzeichnet,**
**dass** das Griffelement (13) sowohl zur Betätigung der Verschlussvorrichtung (8) als auch zur Betätigung der Rasteinrichtung (9) in Fahrzeuglängsrichtung schwenkbar ist.

6. Vorrichtung nach einem der Ansprüche 1 bis 5,
**dadurch gekennzeichnet,**
**dass** für das Griffelement (13) eine in Fahrzeugfrontrichtung verschwenkte Position vorgegeben ist, in welcher das Verdeck (2) mittels des Griffelements (3) bei selbsttätiger Aktivierung der Rasteinrichtung (9) in dessen Verschließstellung überführbar ist.

7. Vorrichtung nach einem der Ansprüche 1 bis 6,
**dadurch gekennzeichnet,**
**dass** für das Griffelement (13) eine in Fahrzeugfrontrichtung verschwenkte Position vorgegeben ist, in welcher die Rasteinrichtung (9) eine entriegelnde Position einnimmt.

8. Vorrichtung nach Anspruch 6 und 7,
**dadurch gekennzeichnet,**
**dass** die die Rasteinrichtung (9) entriegelnde Position des Griffelementes (13) gegenüber der Position, in welcher das Verdeck (2) mittels des Griffelements (3) bei selbsttätiger Aktivierung der Rasteinrichtung (9) in dessen Verschließstellung überführbar ist, weiter in Fahrzeugfrontrichtung, vorzugsweise um weitere 10° bis 15°, verschwenkt ist.

9. Vorrichtung nach einem der Ansprüche 1 bis 8,
**dadurch gekennzeichnet,**
**dass** die Rasteinrichtung (9) bei geschlossenem Zustand des Verdecks (2) und einer in Fahrzeugheckrichtung verschwenkten, wenigstens im Wesentlichen horizontalen Position des Griffelements (13) eine verriegelnde Position einnimmt.

10. Vorrichtung nach einem der Ansprüche 1 bis 9,
**dadurch gekennzeichnet,**
**dass** das Griffelement (13) mit dem Rastelement (17) über ein mit dem Rastelement (17) gelenkig verbundenes und in dessen Schwenkrichtung axial bewegliches Verbindungselement (20) verbunden ist, wobei das Griffelement (13) über eine Kegelradpaarung (27) sowohl mit dem Verbindungselement (20) als auch mit der Verschlussvorrichtung (8) verbunden ist.

11. Vorrichtung nach Anspruch 10,
**dadurch gekennzeichnet,**
**dass** die Kegelradpaarung (27) ein erstes mit dem Griffelement (13) drehfest verbundenes Kegelrad (28) und ein hiermit kämmendes, drehfest mit einer Antriebsachse (29) für die Verschlussvorrichtung (8) verbundenes Kegelrad (30) aufweist, wobei eine Schwenkbewegung des Griffelementes (13) in eine Antriebsbewegung für die Verschlussvorrichtung (8) und die Rasteinrichtung (9) umgesetzt wird.

12. Vorrichtung nach einem der Ansprüche 1 bis 11,
**dadurch gekennzeichnet,**
**dass** die Verschlussvorrichtung (8) zwei Verschlusselemente (10) an dem Verdeck (2) und zwei Verschlussgegenelemente (11) an dem Karosserierahmenteil (5) aufweist.

13. Verdeck eines Cabriolet-Kraftfahrzeuges (1) mit einer Vorrichtung (7) zum Festlegen des Verdecks (2) an einem Karosserierahmenteil (5) gemäß einem der vorhergehenden Ansprüche.

## Claims

1. A device for fixing a hood (2) of a convertible vehicle (1) to a vehicle body frame part (5), said device comprising a closing device (8), which comprises at least one closing element (10) assigned to the hood (2) and at least one complementary closing element (11) engageable therewith and assigned to a vehicle body frame part (5), said device further comprising an additional latching means (9) which comprises a latching element (17) assigned to the hood (2) and a complementary latching element (18) engageable therewith and assigned to the vehicle body frame part (5), **characterised in that**
the latching means (9) is arranged in the area of a handle element (13), which is arranged at least approximately centrally in the transverse direction of the vehicle and by means of which the hood (2) can be moved manually into and out of a closing position, said latching means (9) being automatically activated when moving the hood (2) into the closing position before closing of the closing device (8) and allowing deactivation of the latching means (9) to move the hood (2) from the closing position by actuating the handle element (13).

2. The device according to claim 1, **characterised in that** the latching element (17) is subjected to the spring force of a spring means (19) which moves the latching element (17) into a latching position engaging behind the complementary latching element (18) when moving the hood (2) into the closing position.

3. The device according to claim 1 or 2, **characterised in that** the latching element is provided as a latch hook (17).

4. The device according to any one of claims 1 to 3, **characterised in that** the complementary latching element is provided as an edge (18) of the wind screen frame (5) with a back taper.

5. The device according to any one of claims 1 to 4, **characterised in that** the handle element (13) can be pivoted in the longitudinal direction of the vehicle both to actuate the closing device (8) and to actuate the latching means (9).

6. The device according to any one of claims 1 to 5, **characterised in that** a position pivoted in the direction of the vehicle front is defined for the handle element (13) from which position the hood (2) can be moved into its closing position by means of the handle element (3) upon automatic activation of the latching means (9).

7. The device according to any one of claims 1 to 6, **characterised in that** a position pivoted towards the front of the vehicle is defined for the handle element (13) in which position the latching means (9) occupies an unlatching position.

8. The device according to claims 6 and 7, **characterised in that** the position in which the handle element (13) unlatches the latching means (9) is pivoted further towards the front of the vehicle, preferably about another 10° to 15°, with respect to the position in which the hood (2) can be moved into its closing position by the handle element (3) upon automatic activation of the latching means (9).

9. The device according to any one of claims 1 to 8, **characterised in that** the latching means (9) occupies a locking position in the closed state of the hood (2) and in an at least substantially horizontal position of the handle element (13), pivoted towards the rear of the vehicle.

10. The device according to any one of claims 1 to 9, **characterised in that** the handle element (13) Is connected to the latching element (17) by a connecting element (20), which is articulated to the latching element (17) and is axially moveable in its pivoting direction, wherein the handle element (13) is connected both to the connecting element (20) and to the closing device (8) by a pair of bevel pinions (27).

11. The device according to claim 10, **characterised in that** the pair of bevel pinions (27) comprises a first bevel pinion (28), which is connected to the handle element (13) in a manner fixed against rotation, and comprises a bevel pinion (30) which engages the first bevel pinion (28) and is connected to a driving axis (29) for the closing device (8) in a manner fixed against rotation, wherein a pivoting movement of the handle element (13) is converted into a driving movement for the closing device (8) and the latching means (9).

12. The device according to any one of claims 1 to 11, **characterised in that** the closing device (8) comprises two closing elements (10) on the hood (2) and two complementary closing elements (11) on the vehicle body frame part (5).

13. A hood of a convertible vehicle (1), comprising a device (7) for fixing the hood (2) to a vehicle body frame part (5) according to any one the preceding claims.

## Revendications

1. Dispositif de fixation d'une capote (2) d'un véhicule cabriolet (1) sur un élément de cadre de carrosserie (5), ledit dispositif comprenant un dispositif de fermeture (8), qui comprend au moins un élément de fermeture (10) conjugué à la capote (2) et au moins un élément de fermeture complémentaire (11) venant en prise avec ce premier et conjugué à un élément de cadre de carrosserie (5), ledit dispositif comprenant en outre un moyen d'encliquetage (9) additionnel qui comprend un élément d'encliquetage (17) conjugué à la capote (2) et un élément d'encliquetage complémentaire (18) venant en prise avec l'élément d'encliquetage (17) et conjugué à l'élément de cadre de carrosserie (5),
**caractérisé en ce que**
ledit moyen d'encliquetage (9) est disposé dans la région d'un élément de poignée (13), qui est disposé au moins environ au milieu en direction transversale du véhicule et au moyen duquel la capote (2) peut être déplacée à main vers une position de fermeture et à partir de celle-ci, ledit moyen d'encliquetage (9) étant activé automatiquement lors du déplacement de la capote (2) vers la position de fermeture avant de fermer le dispositif de fermeture (8) et pouvant être désactivé pour déplacer la capote (2) à partir de la position de fermeture par actionnement de l'élément de poignée (13).

2. Dispositif selon la revendication 1, **caractérisé en ce que** l'élément d'encliquetage (17) est soumis à la force élastique d'un moyen de ressort (19) qui déplace l'élément d'encliquetage (17) vers une position d'encliquetage, venant en prise derrière l'élément d'encliquetage complémentaire (18), lors du déplacement de la capote (2) vers la position de fermeture.

3. Dispositif selon la revendication 1 ou 2, **caractérisé en ce que** l'élément d'encliquetage est réalisé sous la forme d'un crochet d'encliquetage (17).

4. Dispositif selon l'une quelconque des revendications 1 à 3, **caractérisé en ce que** l'élément d'encliquetage complémentaire est réalisé sous la forme d'un bord (18) du cadre pare-brise (5) présentant une contre-dépouille.

5. Dispositif selon l'une quelconque des revendications 1 à 4, **caractérisé en ce que** l'élément de poignée (13) peut pivoter en direction longitudinale du véhicule pour actionner le dispositif de fermeture (8) ainsi que le moyen d'encliquetage (9).

6. Dispositif selon l'une quelconque des revendications 1 à 5, **caractérisé en ce qu'**une position pivotée vers l'avant du véhicule est définie pour l'élément de poignée (13), à partir de laquelle la capote (2) peut être déplacée vers sa position de fermeture au moyen de l'élément de poignée (3) lors de l'activation automatique du moyen d'encliquetage (9).

7. Dispositif selon l'une quelconque des revendications 1 à 6, **caractérisé en ce qu'**une position pivotée vers l'avant du véhicule est définie pour l'élément de poignée (13) dans laquelle le moyen d'encliquetage (9) occupe une position de déverrouillage.

8. Dispositif selon la revendication 6 et 7, **caractérisé en ce que** la position dans laquelle l'élément de poignée (13) déverouille le moyen d'encliquetage (9) est pivotée encore plus vers l'avant du véhicule, de préférence autour de 10° à 15° de plus, par rapport à la position dans laquelle la capote (2) peut être déplacée vers sa position de fermeture par l'élément de poignée (3) lors de l'activation automatique du moyen d'encliquetage (9).

9. Dispositif selon l'une quelconque des revendications 1 à 8, **caractérisé en ce que** le moyen d'encliquetage (9) occupe une position de verrouillage lorsque la capote (2) est en état fermée et dans une position de l'élément de poignée (13) pivotée vers l'arrière du véhicule et au moins sensiblement horizontale.

10. Dispositif selon l'une quelconque des revendications 1 à 9, **caractérisé en ce que** l'élément de poignée (13) est relié avec l'élément d'encliquetage (17) par un élément de reliage (20), qui est articulé sur l'élément d'encliquetage (17) et est déplaçable axialement, dans sa direction de pivotement, l'élément de poignée (13) étant relié en même temps avec l'élément de reliage (20) et avec le dispositif de fermeture (8) par une paire de pignons coniques (27).

11. Dispositif selon la revendication 10, **caractérisé en ce que** la paire de pignons coniques (27) comprend un premier pignon conique (28), relié avec l'élément de poignée (13) d'une manière fixée en rotation, et un pignon conique (30) s'engrenant dans le premier pignon conique (28) et étant relié avec un axe d'entraînement (29) du dispositif de fermeture (8) d'une manière fixée en rotation, un pivotement de l'élément de poignée (13) étant transformé en un mouvement d'entraînement du dispositif de fermeture (8) et du moyen d'encliquetage (9).

12. Dispositif selon l'une quelconque des revendications 1 à 11, **caractérisé en ce que** le dispositif de fermeture (8) comprend deux éléments de fermeture (10) sur la capote (2) et deux éléments de fermeture complémentaires (11) sur l'élément de cadre de carrosserie (5).

13. Capote pour un véhicule cabriolet (1), comprenant un dispositif (7) pour fixer ladite capote (2) sur un élément de cadre de carrosserie (5) selon l'une quelconque des revendications précédentes.
